# EUROPEAN PATENT SPECIFICATION

(11) **EP 2 228 349 B1**
(45) Date of publication and mention of the grant of the patent: **04.04.2018**
(21) Application number: 10466009.7
(22) Date of filing: 25.02.2010
(51) Int. Cl.: C03B 23/24, C03C 27/08, E04C 1/42

(54) **Method of reducing heat passage coefficient of pressed glass blocks**
Verfahren zum Senken des Wärmeübergangskoeffizienten von gepressten Glasbausteinen
Méthode pour diminuer le coefficient de transfert de chaleur des briques en verre

(43) Date of publication of application: 15.09.2010
(73) Proprietor: Sousek, Radek, 41901 Duchcov (CZ)
(72) Inventor: Sousek, Radek, 41901 Duchcov (CZ)
(74) Representative: Danek, Vilém

(56) References cited:
- EP-A2- 0 853 168
- DE-A1- 2 830 504
- US-A1- 2004 226 239
- US-B1- 6 802 162

## Description

### Technical Field

Technical solution relates to a method of reducing heat passage coefficient of pressed glass blocks by bonding a metal coated flat glass pad with increased heat reflection, the bonding is made between two halves of glass block divided from each other in the region of weld, and filling of hollows within the glass and outer wall of the block with gas.

The solution also related to a method of manufacture of the above glass blocks.

### Background Art

With regards to actual demands on energy savings, the heat passage coefficient of contemporarily fabricated blocks of pressed glass comprising two pressed pieces boiled down to each other, is insufficient.

The glass sheet with glass pad is discussed in patent documents DE 2830504A1. The document does not describe the method of manufacture of the advanced glass block from existing products. Another document EP0853168A2, where glass sheet has been discussed, relates to a roofing construction with reinforced concrete ribs, whereas the present invention is a glass block used as a wall unit.

### Disclosure of the invention

Heat passage coefficient of pressed glass blocks is reduced by bonding a metal coated flat glass pad guaranteeing higher heat reflection, i.e. SILVER STAR EN plus, or PLANIBEL top N plus, or other convenient glass with increased heat reflection and color tone, the bonding is made in between two halves of glass block divided in the region of primary weld. The glass block of desired size, design and color, is bisected longitudinally in the region of primary weld, and so divided halves are consequently grind flat in the region of the cut, so that we reach the desired size of the glass block after bonding the glass pad with increased heat reflection. The glass pad is cut to desired size so that after its bonding the pad laps over the bond surface. Thereby, the removed primary weld is optically retrieved after bonding the glass block on its sides. Subsequently, the metal coated layer is ground away of the glass pad on entire periphery of the glass and in total margin of eight millimeters measured from the edge of the glass. By grinding away the metal coated layer, the perfect adhesion and tightness of bonded joint is ensured. That protects against rusting of the metal coated layer as a result of penetration of humidity from outer environment. Continuous layer of adhesive is then added on the edges of the surfaced glass, and the two halves of glass block with metal coated pad of flat glass are bonded together. The bonding is made in shielding gas, which may be formed by argon, krypton or dried air. After filling the block hollows with desired gas, the heat passage is decreased and humidity of the inner environment of the glass block is removed, thereby protecting against rusting of the metal coated layer. The glass pad must be bonded in between two halves of glass block that are centered to each other so that it keeps from moving or rotating of the bonded pieces during hardening of the bonded joint. The adhesive must meet the requirements for bonding glass pieces in terms of strength and optical clarity of the bonded joint. The strength of bonded joint must be verified by competent authority according to valid standards on strength of glass blocks. After hardening of the adhesive the overlapping edges are grounded on entire periphery so that they copy the shape of glass block with their maximum overlap of 3 millimeters. The glass block is measured, excessive adhesive is removed, and by consequent submersion in water we can verify the tightness of bonded joint. Once the block is examined, it is dried and damaged lateral coating is repaired with corresponding paint. The advantage of such modified glass blocks, compared to present art, is their ability to decrease the heat passage by more than fifty percent while preserving original size and outward appearance of the glass block.

### Disclosure of figures

Technical solution will be explained in more detail by figures and reference marks.
Fig. 1 - the cut of glass block after modification with bonding the pad of metal coated glass with increased heat reflection, the bonding is made in between two halves of glass block.
Fig. 2 - frontal view of glass block showing unchanged appearance of the block after its modification.

### Examples of embodiment of the invention

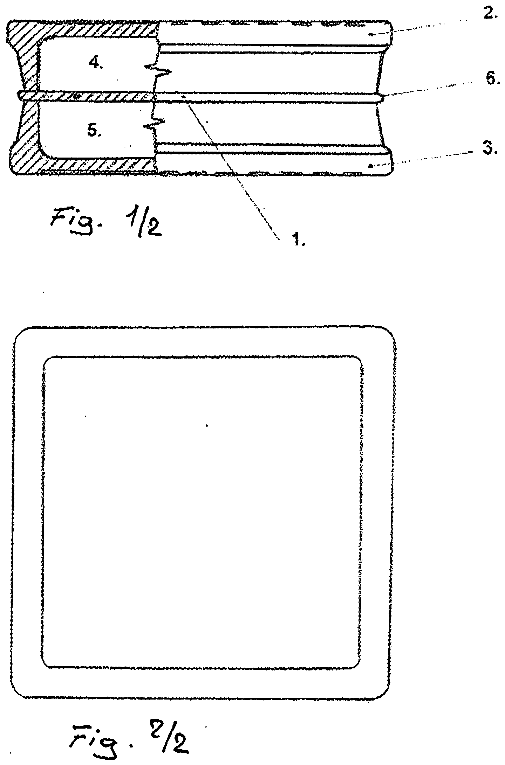

The reduction of heat passage coefficient of pressed glass blocks is achieved (see Fig. 1) by bonding the flat metal coated glass pad (1) with increased heat reflection, the bonding is made in between two halves of glass blocks separated from each other in the region of primary weld. Both halves of glass blocks are grounded to the size which, after bonding of all three pieces together, corresponds with the original size of the glass block. The glass pad (1) is grounded to desired size in the way that it overlaps the bonded edge of the block after bonding on both sides, thereby optically substituting the original weld, and the metal coating is removed from the margin on entire periphery of the glass and in total margin of eight millimeters measured from the edge of the glass. The bonding of all three pieces is performed in shielding gas formed by argon, krypton or dried air, so that the hollows (4), (5) are filled with desired gas, and thereby protecting against corrosion of metal coated layer inside the glass block with reduced heat passage coefficient. Before hardening of bonded joint, the control of move or rotation of bonded parts is performed and the joint is hardened. After hardening of the adhesive we grind the overlapping edges of the glass pad on its entire periphery so that they copy the shape of glass block with maximum overlap of three millimeters. The glass block with reduced heat passage coefficient is measured, excessive adhesive is removed, and by consequent submersion in water the tightness of bonded joint is verified. The examined block with reduced heat passage coefficient is dried and damaged lateral coating is repaired with corresponding paint. The advantage of this technical solution, compared to present art, is the reduction of heat passage by more than fifty percent while preserving original size and outward appearance of the glass block (Fig. 2).

## Claims

1. The method of manufacture of a glass block with reduced heat passage coefficient, **characterized in that** it involves following consequential steps:
- dividing the glass block in the region of primary weld into two halves;
- grounding the glass pad (1) to desired size in the way that it overlaps the bonded edge of the block after bonding on both sides, thereby optically substituting the original weld;
- removing the metal coating from the margin on entire periphery of the glass and in total margin of eight millimeters measured from the edge of the glass;
- bonding the flat metal coated glass pad (1) with increased heat reflection in between two halves of glass blocks separated from each other in the region of primary weld, where both halves of glass blocks are grounded to the size which, after bonding of all three pieces together with adhesive, corresponds with the original size of the glass block, the bonding of all three pieces is performed in shielding gas formed by argon, krypton or dried air;
- performing the control of move or rotation of bonded parts;
- grinding the overlapping edges of the glass pad on its entire periphery so that they copy the shape of glass block with maximum overlap of three millimeters;
- measuring of the glass block and eventual removal of excessive adhesive;
- verification of tightness of bonded joint by submersion in water;
- drying the block;
- reparation of damaged lateral coating with corresponding paint.

## Patentansprüche

1. Die Art der Herstellung der Glasbausteine mit verringerter Wärmedurchgangszahl, **zeichnet sich dadurch aus, dass** sie folgende stufenweise Schritte einschließt:
- Trennung des Glasbausteins im Bereich der Hauptschweißnaht in zwei Hälften;
- Schleifen der Glaseinlage (1) auf die verlangte Größe, so dass sie nach dem Zusammenkleben die Klebekante an jeder Seite überragt, wodurch die ursprüngliche Schweißnaht optisch ersetzt wird;
- Beseitigung der metallisierten Schicht vom Rand auf der gesamten Umfassung des Glases und in der Gesamtbreite von acht Millimeter vom Rand des Glases;
- Einkleben der Glaseinlage (1) mit erhöhtem Wärmereflexionskoeffizient zwischen den zwei Hälften des Glasbausteins getrennt voneinander im Bereich der Hauptschweißnaht, wo beide Hälften des Glasbausteins auf die Größe geschliffen sind, die nach dem Zusammenkleben aller drei Teile der ursprünglichen Größe des Glasbausteins entspricht, wobei das Zusammenkleben aller drei Teile in Schutzatmosphäre durchgeführt wird, die aus Argon, Krypton oder Trockenluft besteht;
- Kontrolle der Verschiebung oder Drehung der geklebten Teile;
- Schleifen der überstehenden Kanten der Glaseinlage auf ihrer gesamten Umfassung, so dass die Kanten die Form des Glasbausteins mit maximalem Überstand von 3 Millimeter kopieren;
- Nachmessen des Glasbausteins und Beseitigung von eventuell überflüssigem Kleber;
- Kontrolle der Dichtheit der geklebten Verbindung durch Eintauchen des Glasbausteins in Wasser;
- Trocknen des Glasbausteins;
- Korrektur des beschädigten Seitenanstrichs mit der entsprechenden Farbe.

## Revendications

1. Processus de fabrication d'une brique en verre ayant un coefficient thermique réduit, **caractérisé en ce qu'**il intègre les étapes suivantes :
- division de la brique en verre en deux moitiés au niveau de la soudure principale ;
- meulage de la douille en verre (1) pour réduire ses dimensions de manière à ce qu'après collage, elle dépasse le bord collé des deux côtés, la soudure initiale est ainsi optiquement remplacée ;
- élimination du revêtement métallique qui se trouve sur le bord, sur tout le contour du verre et sur une largeur totale de huit millimètres à compter du bord du verre ;
- collage de la douille en verre (1) ayant une réflectivité thermique élevée entre les deux moitiés de la brique en verre qui ont été séparées au niveau de la soudure principale en sachant que les deux moitiés de la brique en verre ont été meulées pour qu'après le collage des trois éléments, les dimensions de l'ensemble correspondent aux dimensions initiales de la brique en verre et en sachant que le collage des trois éléments est réalisé sous atmosphère protectrice formée d'argon, de crypton ou d'air sec ;
- contrôle du déplacement ou de la rotation des éléments qui ont été collés ;
- meulage des bords de la douille en verre qui dépassent, sur l'ensemble de son contour, de manière à ce que les bords copient la forme de la brique en verre avec un dépassement de maximum 3 millimètres ;
- mesure de la brique et élimination de l'éventuel excédent de colle ;
- vérification de l'étanchéité du raccord collé en immergeant la brique en verre dans de l'eau ;
- séchage de la brique ;
- réparation de la peinture latérale qui a été dégradée, en utilisant une peinture appropriée.
